# EUROPÄISCHE PATENTSCHRIFT

(11) **EP 1 215 233 B1**
(45) Veröffentlichungstag und Bekanntmachung des Hinweises auf die Patenterteilung: **11.02.2009**
(21) Anmeldenummer: 01128702.6
(22) Anmeldetag: 01.12.2001
(51) Int. Cl.: C08K 9/02, C08K 11/00, C09C 1/00

(54) **Lasermarkierbare Kunststoffe sowie ihre Herstellung und Verwendung**
Lasermarkable plastics their preparation and use
Plastics pour marquage par laser leur procédé de production et utilisation

(30) Priorität: 18.12.2000 DE 10063105
(43) Veröffentlichungstag der Anmeldung: 19.06.2002
(73) Patentinhaber: Merck Patent GmbH, 64293 Darmstadt (DE)
(72) Erfinder: Edler, Gerhard, 65468 Trebur (DE)
(74) Vertreter: Leifert & Steffan

(56) Entgegenhaltungen:
- EP-A- 1 013 722
- WO-A-98/03583

## Beschreibung

Vorliegende Erfindung betrifft lasermarkierbare transparente oder transluzente Kunststoffe, die Herstellung und Verwendung dieser Kunststoffe, aus den Kunststoffen bestehende Formkörper und die Verwendung einer Mischung von Perlglanzpigment und lasersensitivem Pigment.

Die Kennzeichnung von Produktionsgütern wird in fast allen Industriezweigen zunehmend wichtiger. So müssen häufig zum Beispiel Produktionsdaten, Verfallsdaten, Barcodes, Firmenlogos, Seriennummern etc. aufgebracht werden. Da die Anforderungen an die zu übertragende Datenmenge ständig steigen, werden diese Informationen in immer komplexeren Codes, wie beispielsweise Bar-Codes oder Data-Matrix-Codes komprimiert. Derzeit werden diese Markierungen überwiegend mit konventionellen Techniken wie Drucken und Etikettieren ausgeführt. Wachsende Bedeutung gewinnt aber die berührungslose, sehr schnelle und flexible Markierung mit Lasern, insbesondere bei Kunststoffen. Diese Technik ermöglicht es, grafische Beschriftungen, wie z. B. Barcodes, mit hoher Geschwindigkeit auch auf nicht plane Oberflächen aufzubringen ohne weitere haftungsverbessernde Vorbehandlungen des Kunststoffs vornehmen zu müssen. Da sich die Beschriftung im Kunststoffkörper selbst befindet, ist sie dauerhaft und abriebbeständig.

Um die auf die Kunststoffe aufgebrachten Lasermarkierungen maschinell zu lesen, werden zum Beispiel Laserscanner oder CCD-Kameras eingesetzt. Diese ermöglichen die schnelle Erkennung von größeren Datenmengen. Alle Erkennungssysteme benötigen einen genügenden Kontrastabstand zwischen den zu detektierenden Informationsträgen, z. B. Barcode-Linien, und dem Untergrund, um eine entsprechend hohe Ablesesicherheit zu gewährleisten. Bei einem weißen Untergrund ist diese Forderung für alle Detektoren relativ problemlos zu erreichen, auf farbigen Untergründen hingegen nur schwierig und auf transparenten Untergründen kann mit dem Laserscanner keine Ablesung erreicht werden. Transparente bzw. transluzente Verpackungen bieten jedoch den Vorteil, daß sowohl die Form als auch die Füllstandshöhe des Inhalts leicht erkennbar sind.

Das Aufbringen von variablen Daten mittels Etikett ist ein aufwendiges und teures Verfahren und wird folglich immer mehr durch die Lasermarkierung ersetzt. Diese Methode ist schnell, einfach und preiswert und bietet zusätzlich noch den Vorteil, daß die Informationen unveränderbar mit dem Material verbunden sind. Werden die Daten mit Hilfe von Drucktechniken aufgebracht, besteht auch bei transparenteren Einfärbungen die Möglichkeit, durch Verwendung von weißer Druckfarbe einen Code aufzubringen, der invers lesbar ist. Auf den im Verpackungsbereich am häufigsten vorkommenden Kunststoffen werden mit dem Laser jedoch bevorzugt dunkle Markierungen erzeugt. Bei transparenteren Einfärbungen ist dann jedoch aufgrund fehlender Reflexion des Kunststoffes der Kontrastabstand zwischen dem transparenten Kunststoff und den dunklen (lichtabsorbierenden) Bar-Code-Linien für eine erfolgreiche Scanner-Erkennung zu gering.

Zur Lasermarkierung von Kunststoffen sind spezielle Pigmente bekannt, welche die Strahlung des jeweiligen Lasers absorbieren und eine dunkle oder auch helle Markierung des Kunststoffs hervorrufen. Hierbei handelt es sich beispielsweise um plättchenförmige Glimmerpigmente, die aus unbeschichtetem oder beschichtetem Glimmer bestehen, aber auch andere für die Lasermarkierung spezifische Pigmente, die einen Farbumschlag im Kunststoff hervorrufen, sind einsetzbar. Laserpigmente der beschriebenen Art sind unter der Bezeichnung Iriodin® LS von der Firma Merck KGaA, Darmstadt, BRD, erhältlich.

Diese Pigmente ermöglichen die Markierung von natürlicherweise nicht markierbaren Kunststoffen oder bewirken in per se markierbaren Kunststoffen eine zusätzliche Kontraststeigerung der Lasermarkierung gegenüber dem Untergrund. Jedoch ist es erforderlich, insbesondere bei transparenten oder transluzenten Kunststoffen den Kontrast weiter zu steigern, um damit die Scannerlesbarkeit der Markierungen möglich zu machen.

Der vorliegenden Erfindung liegt daher die Aufgabe zugrunde, lasermarkierbare transparente oder transluzente Kunststoffe anzugeben, bei denen die Scannerlesbarkeit von Lasermarkierungen aufgrund eines höheren Kontrasts zum nichtmarkierten Untergrund stark verbessert ist, ohne daß die Transparenz des Kunststoffs zu stark herabgesetzt wird.

Überraschenderweise wurde gefunden, daß diese Aufgabe durch die Verwendung der oben beschriebenen speziell für die Lasermarkierung entwickelten Pigmente in Kombination mit Perlglanzpigmenten, insbesondere durch die Verwendung einer Mischung von Perlglanzpigment mit Schichtsilikaten als Substraten und darauf abgeschiedenen Schichten aus Metalloxiden und lasersensitivem Pigment aus mit einem oder mehreren Metalloxiden beschichtetem Glimmer, das selbst keinen Perlglanzeffekt aufweist, in lasermarkierbaren Kunststoffen gelöst werden kann.

Gegenstand der Erfindung sind daher lasermarkierbare transparente oder transluzente Kunststoffe, die Perlglanzpigmente mit Schichtsilikaten als Substrate und darauf abgeschiedenen Schichten aus Metalloxiden, in Kombination mit lasersensitiven Pigmenten aus mit einem oder mehrere Metalloxiden beschichtetem Glimmer, die selbst keinen Perlglanzeffekt aufweisen, enthalten.

Perlglanzpigmente, die auch als Interferenzpigmente bezeichnet werden, sind plättchenförmige Pigmente, bei denen alternierende Schichten eines Materials mit niedriger Brechzahl und eines Materials mit hoher Brechzahl oder eines Metalls auf einem absorbierenden plättchenförmigen Substrat angeordnet sind, das opak oder semiopak ist. Als Substrate sind zum Beispiel Schichtsilikate, wie etwa Glimmer, synthetische Glimmer, Talkum, Sericit, Kaolin, Glas oder andere silikatische Materialien geeignet. Die hierauf abgeschiedenen Schichten können aus farbigen oder farblosen Metalloxiden wie z. B. TiO₂, Fe₂O₃, Fe₃O₄, SnO₂, Cr₂O₃, ZnO, CuO, NiO und anderen Metalloxiden allein oder in Mischung bestehen. Diese Pigmente sind zum Beispiel aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z. B. unter der Marke Iriodin® der Firma Merck KGaA, Darmstadt, BRD. Besonders bevorzugte Pigmentpräparationen enthalten TiO₂/Glimmer-, Fe₂O₃/Glimmer und/oder TiO₂/Fe₂O₃-Glimmerpigmente.

Zwar werden im Stand der Technik auch Perlglanzpigmente zur Pigmentierung von lasermarkierbaren Kunststoffen eingesetzt. Der kombinierte Einsatz der erfindungsgemäß einzusetzenden Pigmente ist jedoch im Stande der Technik nicht beschrieben und er wird durch diesen auch nicht nahegelegt, da nicht zu erwarten war, daß durch die erfindungsgemäß einzusetzende Pigmentkombination die oben genannte Aufgabe gelöst würde.

Die erfindungsgemäßen lasermarkierbaren Kunststoffe enthalten vorteilhaft 0,1 bis 2 Gew.-% Perlglanzpigment und 0,1 bis 1,0 Gew.-% lasersensitives Pigment jeweils bezogen auf das Gewicht des Kunststoffs. Geringere Gehalte an Perlglanzpigment erzeugen keinen ausreichenden Effekt und höhere Gehalte setzen die Transparenz des Kunststoffs zu stark herab.

Bei den Kunststoffen handelt es sich vorzugsweise um Polyethylen, Polypropylen, Polyethylenterephthalat, Polycarbonat und PVC.

Als Perlglanzpigment kommen die oben beschriebenen im Stand der Technik bekannten Perlglanzpigmente in Betracht. Vorzugsweise besteht dieses Pigment aus mit Titandioxid beschichteten Plättchen aus natürlichem oder synthetischem Glimmer, Aluminiumoxid, Siliziumdioxid, Wismutoxidchloridplättchen und/oder basischem Bleicarbonat in Plättchenformat.

Als lasersensitive Pigmentkomponente werden vorteilhaft unbeschichteter Glimmer oder ein oder mehrere aus mit Metalloxiden beschichtetem Glimmer bestehende Pigmente eingesetzt, wobei als Metalloxid beispielsweise TiO₂, Sn/Sb-Mischoxid, Sn/ln-Mischoxid etc. eingesetzt werden kann. Dabei ist die Art und Dicke der Beschichtung jedoch so zu wählen, daß kein Perlglanzeffekt auftritt. Auch andere Pigmente oder Zuschlagstoffe sind einsetzbar, wie sie beispielsweise in der Patentanmeldung DE-A-197 26 136 aufgeführt sind, sofern sie zu einer sichtbaren Farbänderung des Kunststoffs führen. Bevorzugte lasersensitive Pigmente sind diejenigen, die unter der Bezeichnung Iriodin®LS von der Firma Merck KGaA, Darmstadt, BRD, erhältlich sind.

Die erfindungsgemäßen Kunststoffe können nach den bekannten Lasermarkierverfahren unter Verwendung verschiedener Lasertypen markiert werden, beispielsweise mittels CO₂-Laser, Nd:YAG-Laser, gepulste TEA-CO₂-Laser, Eximer-Laser und andere bekannte Lasertypen. Die Markierung kann nach dem Masken- oder Strahlablenkverfahren erfolgen.

Die Erfindung betrifft auch ein Verfahren zur Herstellung der erfindungsgemäßen lasermarkierbaren Kunststoffe, bei dem ein thermoplastisches Kunststoffgranulat mit dem Perlglanzpigment und dem lasersensitiven Pigment gemischt und dann unter Wärmewirkung verformt wird.

Gegenstand der Erfindung sind weiterhin die Verwendung der lasermarkierbaren Kunststoffe zur Herstellung von Formkörpern, die mit Hilfe von Laser-Strahlung markierbar sind, sowie die entsprechenden Formkörper. Die Kunststoffe sind insbesondere zur Herstellung von Hohlkörpern geeignet, die als Verpackungsmaterial dienen. Aufgrund der vorteilhaften Eigenschaften des erfindungsgemäßen Kunststoffs ist einerseits eine hohe Scannerlesbarkeit gegeben und andererseits reicht die Transparenz der Kunststoffe aus, um den Inhalt der entsprechenden Hohlkörper zu erkennen.

Allgemein betrifft die Erfindung die Verwendung einer Mischung von Perlglanzpigment und lasersensitivem Pigment in lasermarkierbaren Kunststoffen zur Verbesserung der Scannerlesbarkeit von auf die Kunststoffe aufgebrachten Lasermarkierungen.

Im folgenden wird die Erfindung anhand von Ausführungsbeispielen näher erläutert.

### Beispiel 1

Es wurde eine Flasche aus transparentem Polyethylen mit Interferenzgelb als Perlglanzpigment und mit Iriodin® LS 825 als lasersensitives Pigment zur Lasermarkierung eingefärbt. Als Kontrolle diente eine Flasche aus transparentem Polyethylen, die lediglich mit Iriodin® LS 825 eingefärbt wurde. Ein mittels Nd:YAG-Laser aufgebrachter Barcode war auf der mit dem Perlglanzpigment eingefärbten Polyethylenflasche gut lesbar, während der Barcode auf der Perlglanzpigment-freien Polyethylenflasche nicht lesbar war. Die Barcodes auf beiden Flaschen sind jedoch gleich dunkel und der Füllstand der wasserklaren Flüssigkeit ist in beiden Flaschen etwa gleich gut zu erkennen. Durch die kombinierte Anwendung von Perlglanzpigment und lasersensitivem Pigment wird der Kontrast zwischen Barcode und Untergrund stark erhöht, so daß die Beschriftung maschinenlesbar wird.

### Beispiel 2

Eine Polyethylenflasche, eingefärbt mit 0,4 % eines feinteiligen, silberweißen Perlglanzpigments und 0,3 % Iriodin® LS 810 wurde mit Hilfe eines gepulsten CO₂-Lasers (Maskenverfahren) mit einem Barcode markiert. Der Barcode konnte mit verschiedenen Scannerlesegeräten mit nahezu 100 % Auslesesicherheit gelesen werden. Der Barcode einer Vergleichsflasche, die nur das Iriodin LS 810, aber kein Perlglanzpigment enthielt, war mit keinem der verwendeten Geräte lesbar. Der Füllstand und die Farbe von gefärbten und auch wasserklaren Flüssigkeiten war bei beiden Flaschen gleich gut erkennbar.

## Patentansprüche

1. Lasermarkierbare transparente oder transluzente Kunststoffe, **dadurch gekennzeichnet, daß** sie Perlglanzpigmente mit Schichtsilikaten als Substraten und darauf abgeschiedenen Schichten aus Metalloxiden, in Kombination mit lasersensitiven Pigmenten aus mit einem oder mehreren Metalloxiden beschichtetem Glimmer, die selbst keinen Perlglanzeffekt aufweisen, enthalten.

2. Lasermarkierbare Kunststoffe nach Anspruch 1, **dadurch gekennzeichnet, daß** sie 0,1 bis 2 Gew.-% Perlglanzpigment und 0,1 bis 1,0 Gew.-% lasersensitives Pigment bezogen auf das Gewicht des Kunststoffs enthalten.

3. Lasermarkierbare Kunststoffe nach Anspruch 1 oder 2, **dadurch gekennzeichnet, daß** der Kunststoff Polyethylen, Polypropylen, Polyethylenterephthalat, Polycarbonat oder PVC ist.

4. Lasermarkierbare Kunststoffe nach Anspruch 1 bis 3, **dadurch gekennzeichnet, daß** das lasersensitive Pigment aus unbeschichtetem Glimmer oder aus mit einem oder mehreren Metalloxiden wie beispielsweise TiO₂, Sn/Sb-Mischoxid, Sn/In-Mischoxid beschichtetem Glimmer besteht, wobei die Art und Dicke der Beschichtungen derart ist, daß kein Perlglanzeffekt auftritt.

5. Verfahren zur Herstellung von lasermarkierbaren Kunststoffen nach Anspruch 1 bis 4, **dadurch gekennzeichnet, daß** ein thermoplastisches Kunststoffgranulat mit dem Perlglanzpigment und dem lasersensitiven Pigment gemischt und dann unter Wärmewirkung verformt wird.

6. Verwendung der lasermarkierbaren Kunststoffe nach Anspruch 1 bis 4 zur Herstellung von Formkörpern, die mit Hilfe von Laser-Strahlung markierbar sind.

7. Formkörper bestehend aus dem lasermarkierbaren Kunststoff nach Anspruch 1 bis 4.

8. Verwendung einer Mischung von Perlglanzpigment mit Schichtsilikaten als Substraten und darauf abgeschiedenen Schichten aus Metalloxiden und lasersensitivem Pigment aus mit einem oder mehreren Metalloxiden beschichtetem Glimmer, das selbst keinen Perlglanzeffekt aufweist, in lasermarkierbaren Kunststoffen zur Verbesserung der Scannerlesbarkeit von auf die Kunststoffe aufgebrachten Lasermarkierungen.

## Claims

1. Laser-markable transparent or translucent plastics, **characterized in that** they contain pearlescent pigments with layer silicates as substrates and, deposited thereon, layers of metal oxides in combination with laser-sensitive pigments consisting of mica coated with one or several metal oxides which pigments exhibit no pearlescent effect themselves.

2. Laser-markable plastics according to claim 1, **characterized in that** they contain 0.1 to 2 % by wt. of pearlescent pigment and 0.1 to 1.0 % by wt. of laser-sensitive pigment, based on the weight of the plastic.

3. Laser-markable plastics according to claim 1 or 2, **characterized in that** the plastic is polyethylene, polypropylene, polyethylene terephthalate, polycarbonate or PVC.

4. Laser-markable plastics according to claim 1 to 3, **characterized in that** the laser-sensitive pigment consists of uncoated mica or of mica coated with one or several metal oxides such as e.g. TiO₂, Sn/Sb mixed oxide, Sn/In mixed oxide, the type and thickness of the coatings being such that no pearlescent effect occurs.

5. Process of the production of laser-markable plastics, according to claim 1 to 4 **characterized in that** a thermoplastic granular plastic material is mixed with the pearlescent pigment and the laser-sensitive pigment and then moulded under the effect of heat.

6. Use of the laser-markable plastics, according to claim 1 to 4 for the production of moulded bodies which are markable by means of laser radiation.

7. Moulded body consisting of the laser-markable plastic according to claim 1 to 4.

8. Use of a mixture of pearlescent pigment with layer silicates as substrates and, deposited thereon, layers of metal oxides and laser-sensitive pigment of mica coated with one or several metal oxides, which pigment exhibits no pearlescent effect itself, in laser-markable plastics for improving the scanner readability of laser markings applied onto the plastics.

## Revendications

1. Plastiques transparents ou translucides pouvant être marqués par laser, **caractérisés en ce qu'**ils contiennent des pigments perlés présentant des phyllosilicates en tant que substrats et des couches d'oxydes métalliques qui y sont déposées, en combinaison avec des pigments sensibles au laser composés de mica recouvert d'un ou de plusieurs oxydes métalliques qui ne présentent eux-mêmes aucun effet perlé.

2. Plastiques pouvant être marqués par laser selon la revendication 1, **caractérisés en ce qu'**ils contiennent 0,1 à 2 % en poids de pigment perlé et 0,1 à 1,0 % en poids de pigment sensible au laser relativement au poids du plastique.

3. Plastiques pouvant être marqués par laser selon la revendication 1 ou 2, **caractérisés en ce que** le plastique est du polyéthylène, polypropylène, polyéthylène téréphtalate, polycarbonate ou PVC.

4. Plastiques pouvant être marqués par laser selon les revendications 1 à 3, **caractérisés en ce que** le pigment sensible au laser est composé de mica non recouvert ou de mica recouvert d'un ou de plusieurs oxydes métalliques tels que, par exemple, TiO₂, oxyde mixte Sn/Sb, oxyde mixte Sn/In, le type et l'épaisseur des revêtements étant tels qu'aucun effet perlé n'apparaît.

5. Procédé de production de plastiques pouvant être marqués par laser selon les revendications 1 à 4, **caractérisé en ce que** des granulés synthétiques thermoplastiques sont mélangés avec le pigment perlé et le pigment sensible au laser et, ensuite, moulés sous l'action de la chaleur.

6. Utilisation des plastiques pouvant être marqués par laser selon les revendications 1 à 4 pour produire des moules qui peuvent être marqués par rayonnement laser.

7. Moule composé du plastique pouvant être marqué par laser selon les revendications 1 à 4.

8. Utilisation d'un mélange de pigment perlé présentant des phyllosilicates en tant que substrats et des couches d'oxydes métalliques qui y sont déposées et de pigment sensible au laser composé de mica recouvert d'un ou de plusieurs oxydes métalliques, lequel ne présente lui-même aucun effet perlé, dans des plastiques pouvant être marqués par laser afin d'améliorer la lisibilité par scanner de marquages par laser appliqués sur les plastiques.
